# EUROPEAN PATENT SPECIFICATION

(11) **EP 0 871 008 B1**
(45) Date of publication and mention of the grant of the patent: **07.08.2002**
(21) Application number: 98106052.8
(22) Date of filing: 02.04.1998
(51) Int. Cl.: G01B 11/24, G01B 11/10

(54) **Device for measuring the dimensions of an object that is very extensive longitudinally and whose cross section has a curved contour**
Vorrichtung zum Messen der Dimensionen eines langgestreckten Objektes mit einer im Durchschnitt gekrümmten Kontur
Dispositif pour mesurer les dimensions d'un objet longitudinal avec une coupe transversale courbe

(30) Priority: 10.04.1997 IT BZ970020
(43) Date of publication of application: 14.10.1998
(73) Proprietor: MICROTEC S.r.l., 39042 Bressanone (Bolzano) (IT)
(72) Inventor: Giudiceandrea Federico, 39042 Bressanone (BZ) (IT)
(74) Representative: Ghioni, Carlo Raoul Maria

(56) References cited:
- EP-A- 0 348 340
- WO-A-91/08439
- WO-A-94/24517
- DE-A- 3 633 275
- DE-A- 3 925 588
- FR-A- 2 735 860

## Description

The present invention relates to a device for measuring the dimensions of an advancing and longitudinally very extensive object, whose generic cross section has a curved contour according to the preamble of claim 1.

Such device finds application in particular in sawmills, to measure automatically and rapidly the dimensions of the tree trunks to be cut and thus enable to adapt the subsequent cutting machines to the dimensions of the respective trunk to be cut each time.

In order to minimise-scrap, cutting machines need to be calibrated on the largest geometric cylinder contained in the trunk to be cut. To do so it is necessary to determine the maximum cross section present in the entire trunk taking into account the curvature of the trunk.

At the basis of all methods known in the prior art is the schematisation of a trunk with the succession of a plurality of cross sections of the trunk, which are measured in a measuring area when the trunk travels through that area. In addition to the dimensions, the position of these cross sections with respect to a known reference system is also determined, in such a way as to consider also the curvature of the trunk. Obviously, the greater the number of cross sections taken into consideration, the more faithfully the succession of the cross sections will represent the actual trunk.

Within this context, the actual irregular oval contour of the generic cross section of a trunk is approximated with a geometric figure that can be processed mathematically, such as a circle or an ellipse. The schematic representation of the actual contour with an ellipse is preferable, because it is more realistic.

In this hypothesis, the technical problem of measuring the cross section of a trunk consists then in the determination of the circle or ellipse whose perimeter best approaches the actual irregular oval contour of the trunk as well as in the determination of the position of the circle or of the ellipse within the known reference system. As is well known from geometry, three geometric conditions are required to identify a circle, whereas five are required to identify an ellipse. a typical geometric condition, which must be met by a circle or an ellipse able to approximate the contour of the cross section, is for instance the fact that the circle or the ellipse is tangential to a straight line coinciding with a light beam which in turn is tangential to the contour. Another typical geometric condition is for instance the fact that the circle or the ellipse pass through a known point belonging to the contour.

Currently, according to the prior art, the device for transporting the trunks to be measured presents an interruption coinciding with the measuring area. Traditionally, the trunk whose cross sections are to be measured rests on appropriate supports, which prevent the trunk from rolling due to its roundness. These supports are made to advance in the longitudinal direction of the trunk on a pair of tracks. Then, since the measurements occur by means of optical devices which invest the trunk with light beams, subsequently detecting their effects, an interruption of that pair of tracks is necessary coinciding with the measuring area of these devices, in order for the pair of tracks not to hinder the light beams emitted by these devices. According to a first example of prior art in the measuring area are provided two scanners mutually arranged at 90°. Each of them invests from one side the trunk with a sequence of parallel light rays. From the opposite side of the trunk with respect to each scanner is placed a plurality of sensors, which indicate the reception of the associated light ray if the latter is not reflected by the trunk. For each scanner, therefore, there will be two light rays tangential to the trunk, respectively from parts opposite to the trunk, which have been received by the sensors and delimit a strip within which the sensors are not able, due to the obstacle of the trunk, to receive the light rays emitted by the scanner. The positions of the scanner and of the sensors, as well as the other geometric dimensions, being known, four light rays tangential to the contour of the section are then known, which allow to set four corresponding geometric conditions. Hence any set of three conditions, chosen from these four, can be used to determine a circle with which the actual profile of the contour of the cross section undergoing measurement can be approximated.

According to a second example of the prior art, in the measurement area are provided two sources of light, which illuminate the object from directions mutually set at 90°. From the opposite side of the object with respect to each light source, is positioned respectively a plurality of sensors. Such sensors receive the light of the light sources according to the size of the object interposed between them and the respective light source. In this case as well, at least four light rays tangential to the contour of the cross section can be determined. The position of these rays is known because they lie on the straight line that connects the light source and the receiving sensor. This knowledge, together with the knowledge of the geometric characteristics of the system, again allows to set four geometric conditions, with three of which it is possible to identify a circle with which to approximate the actual contour of the cross section undergoing measurement.

Both of these two prior art solutions, however, share the drawback of entailing an interruption in the pair of tracks whereon the trunk is made to advance, so that the trunk must be transferred from the supports of the first pair of tracks, preceding the interruption, to the supports of the second pair of tracks, subsequent to the interruption. During this, in the initial moment wherein the trunk has left the first of the supports of the first pair of tracks and it has not yet settled on the first support of the second pair of tracks, movements of the trunk are possible, due to its irregular roundness and to the difference in height between the support it has left and the one whereon it will bear.

Since these movements take place in the very measurement area, when they do occur they jeopardise the accuracy of the measurement. These movements do not alter the measurement of the dimensions of the cross section, but rather the determination of its position with respect to the known reference system, so that the determination of the curvature of the trunk is influenced.

Document DE 36 33 275 relates to a process for identifying the position of points delimiting the elliptic transversal section of an object.

Three receivers are included, in particular three telecameras and three fluorescent tubes. The optical axes of two of the receivers are staggered by 90°, while the optical axis of the third receiver is oriented at 45° with respect to the first receiver and at 135° with respect to the second receiver.

Each receiver reads the two edges of its shadow zone and the points of intersection of the various edges determine an irregular hexagon about the transversal section of the object. The coordinates of the intersection points are determined and on the basis of these coordinates the values of three diameters are determined, namely in the direction of the first receiver, in the direction of the second receiver and in the direction of the third receiver. A fourth value of the diameter, called the mean value, is obtained from the value of the surface of the hexagon.

Further mathematical and geometric calculations are made on the diameter values, leading to obtaining data regarding the elliptical transversal section of the object.

The document WO91/08439 shows an arrangement for optoelettronic measurement of the shape of an object. The arrangement comprises at least two light sources, each of which projects at least one narrow light beam onto the object to be measured. The light beams are recorded by a number of video cameras equal to the number of light sources. The video cameras are connected to an evaluation device, comprising a computer, which evaluates the photos and calculates the dimensions of the object.

Starting from this known arrangement it is the object of the present invention to realise a device for measuring the dimensions of an advancing and longitudinally very extensive object, whose generic cross section has curved contour, with which it is possible both to measure the dimensions of the cross sections and to determine their mutual position without requiring, in correspondence with the measurement area, an interruption in the pair of tracks whereon the trunks are made to advance. This object is attained by a device having the characteristics indicated in claim 1.

With these characteristics it is no longer necessary to provide for an interruption in the pair of tracks coinciding with the measurement area.

Upon determining the two light rays tangential to the semi-contour of the cross section to be measured, the scanner operates parallel to the bearing plane of the supports on the pair of tracks. The tracks therefore are not invested by the light rays, since a free space exists between them and the trunk, equal to the height of the supports on which the trunk bears. For this purpose it is not necessary for the height of the supports to be great.

The tracks are not a hindrance even when determining at least three points belonging to the contour of the cross section. The sources of laser light are positioned at the sides of the semi-contours of the cross section, in order for the laser light lines which are created to be able to lie mainly in the central part of the respective semi-contour. This latter circumstance is important for the five geometric conditions identifying the ellipse to be distributed possibly in a uniform manner on the contour and specifically the first two (tangential rays) in the upper part and in the lower part of the contour and the other three (dots) in the lateral parts of the contour, preferably in the central parts of the contour, in order to be distant from the other two.

It is evident that it will not be possible to measure the cross sections positioned directly on the various supports, but they represent only a minimum proportion of the cross section with which the trunk can be divided.

Additional characteristics and advantages of the present invention will be more readily apparent from the detailed description that follows of embodiments, shown purely by way of non-limiting indication in the accompanying drawing, wherein:

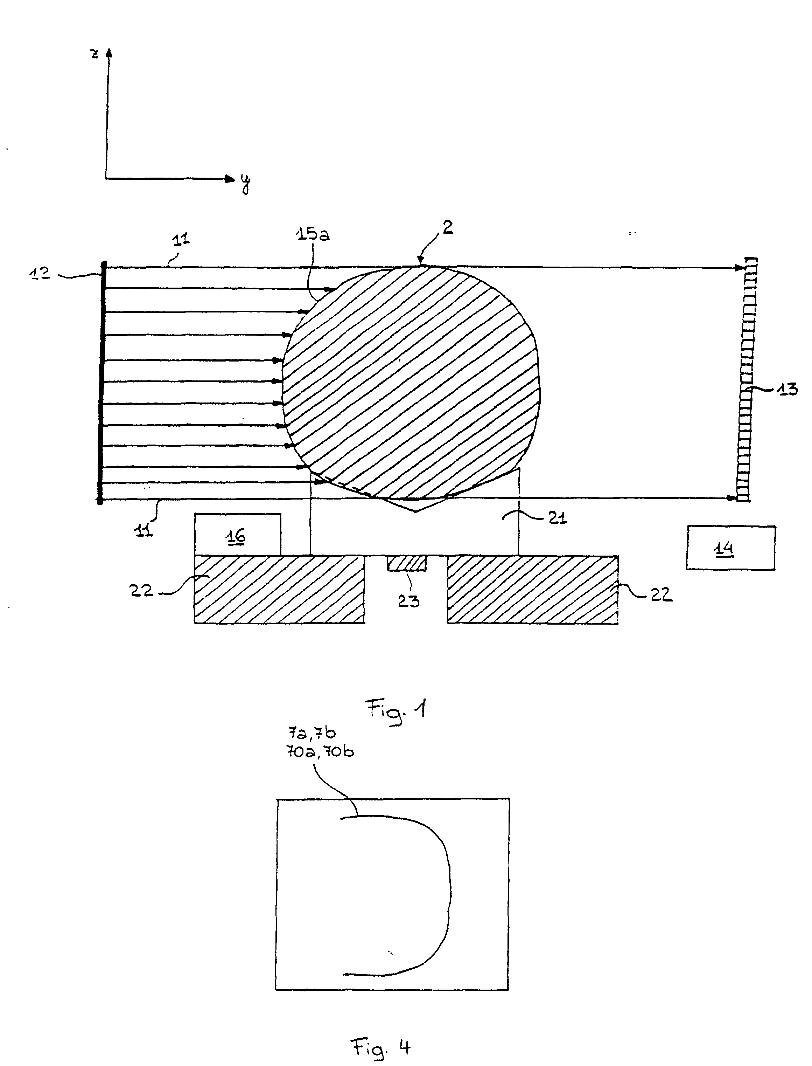

- Figure 1 shows a cross section of the device constituting the subject of the present invention in a first, second, third and fourth embodiment, for the sake of simplicity of representation showing only the components which are active upon determination of the two light rays tangential to the semi-contour of the cross section under measurement,

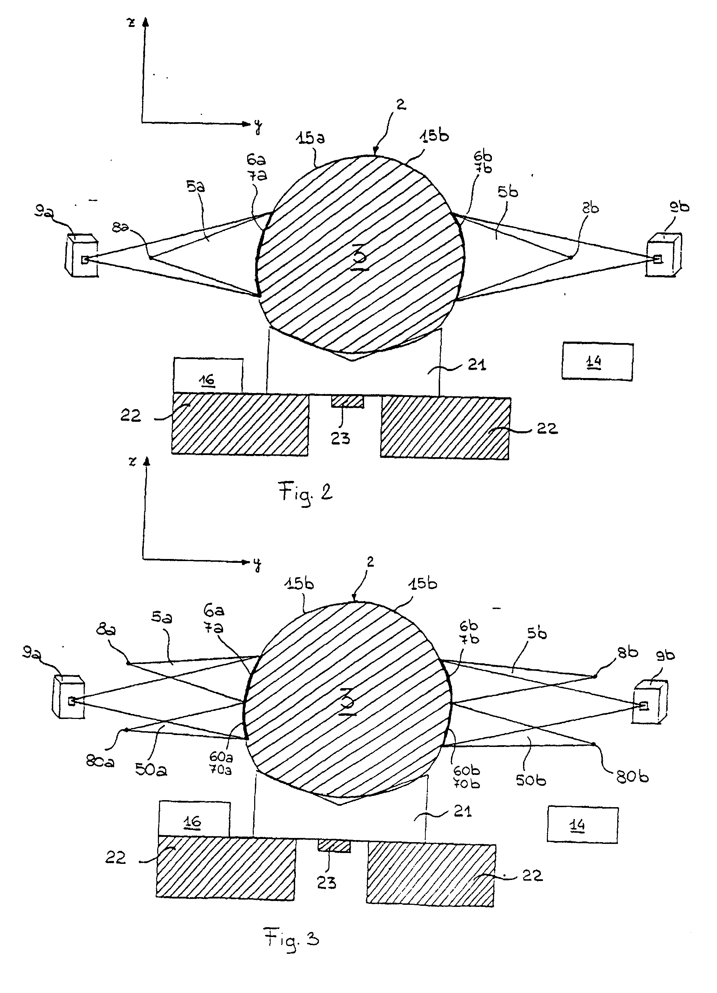

- Figure 2 shows a cross section of the device constituting the subject of the present invention, valid both for the first embodiment, wherein two sources of laser light and two telecameras are provided, and for the third embodiment, wherein two sources of laser light and four telecameras are provided, for the sake of simplicity of representation showing only the components which become active upon determination of at least three points belonging to the contour of the cross section under measurement;

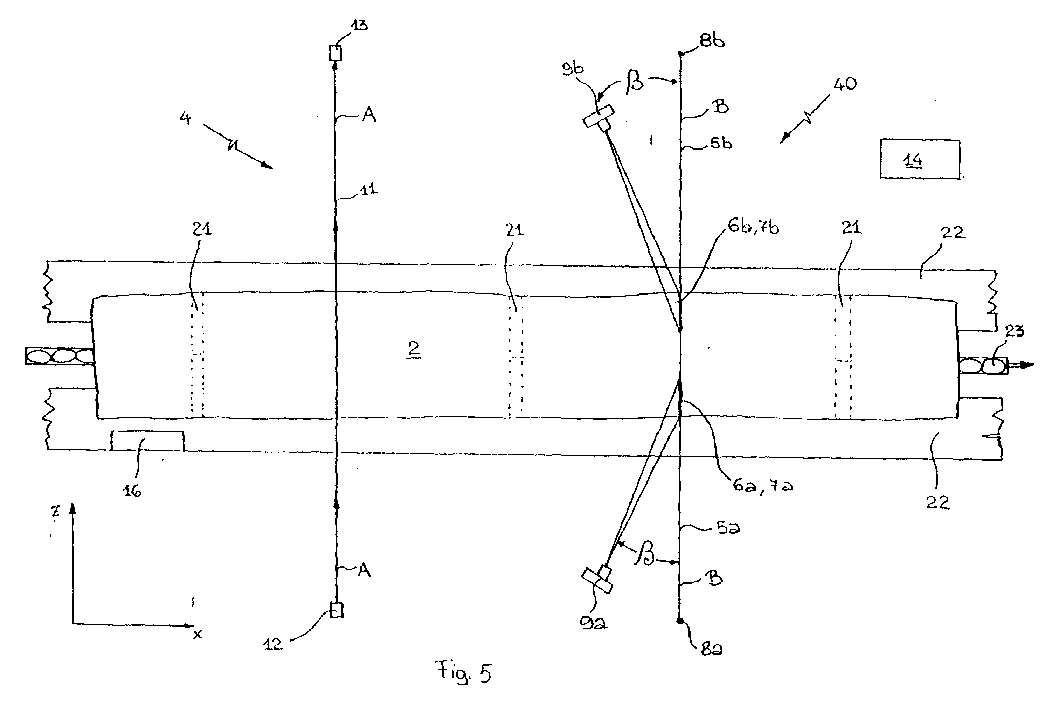

- Figure 3 shows a cross section of the device constituting the subject of the present invention, valid both for the second embodiment, wherein four sources of laser light and two telecameras are provided, and for the fourth embodiment, wherein four sources of laser light and four telecameras are provided, for the sake of pictorial simplicity showing only the components that become active upon determination of at least three points belonging to the contour of the cross section to be measured,
- Figure 4 shows a sample image captured by one of the matrix cameras,
- Figure 5 shows a top view valid both for the first and for the second embodiment, in the hypothesis of providing for two distinct measurement areas, one for determining the two light rays tangential to the semi-contour of the cross section and one for determining at least a set of three points belonging to the contour of the cross section,

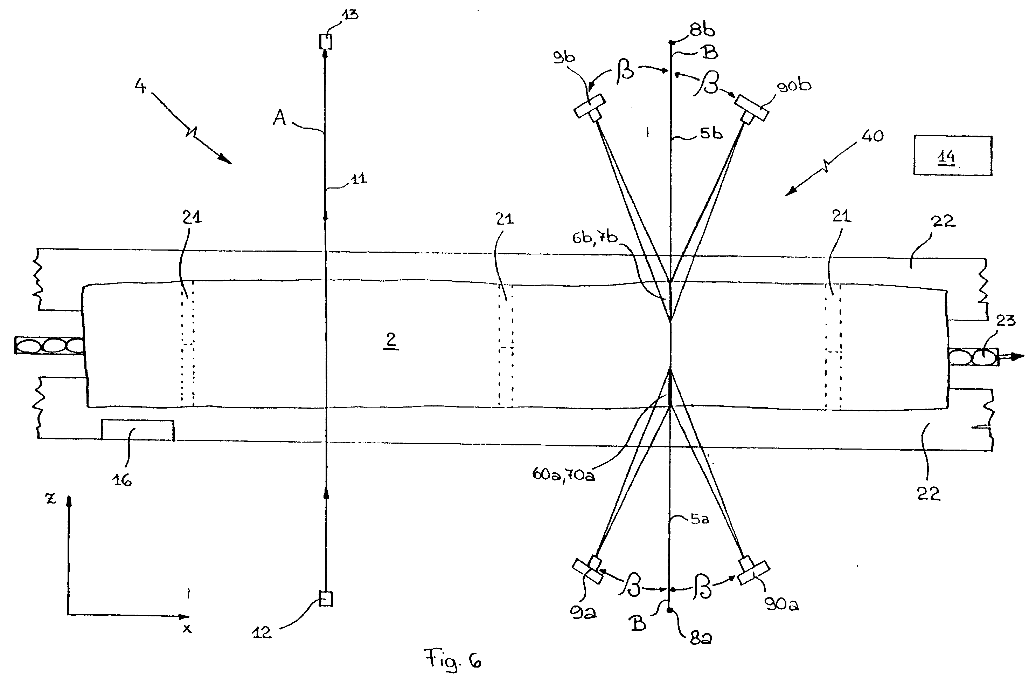

- Figure 6 shows a top view valid both for the third and for the fourth embodiment, in the hypothesis of providing for two distinct measurement areas, one for determining the two light rays tangential to the semi-contour of the cross section and one for determining at least a set of three points belonging to the contour of the cross section,

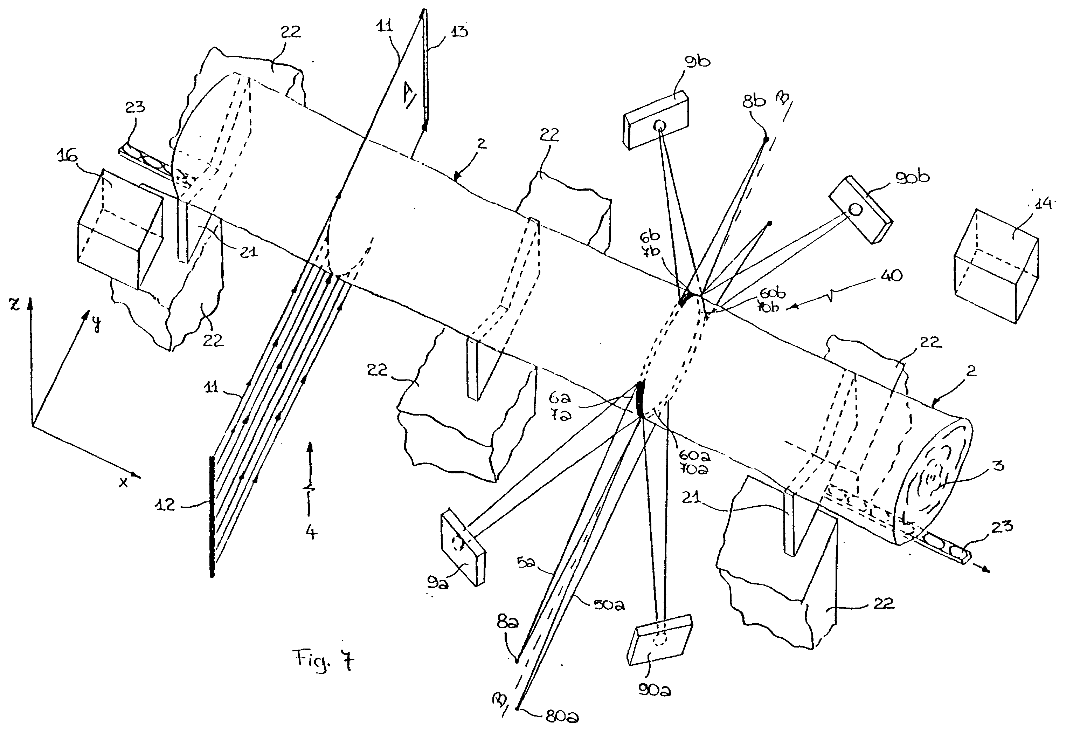

- Figure 7 shows a highly schematic overall axonometry view of the fourth embodiment, in the hypothesis of providing for two distinct measurement areas, one for determining the two light rays tangential to the semi-contour of the cross section and one for determining at least a set of three points belonging to the contour of the cross section.

With reference to the figures, a device for measuring the dimensions of an object 2 very extensive longitudinally and with cross section 3 having curved contour 15 has been shown. A typical example for such an object 2 is a tree trunk. It bears on appropriate supports 21, which are made to advance, for instance driven by a chain 23, on a pair of tracks 22 which extends through the device.

As is well known, the contour 15 of the cross section is mathematically approximated with an ellipse. The letters X;Y;Z indicate a known reference system chosen according to convenience. Each cross section 3 measured is approximated with an ellipse, whose position and conformation with respect to such X;Y;Z reference system is determined, so that the succession of the ellipses approximating the various cross sections provides a schematic mathematical representation of the actual conformation of the trunk 2.

As Figure 1 shows, to determine two of the five geometric conditions necessary to identify an ellipse able to approximate the contour 15 of the generic cross section 3 undergoing measurement, the device comprises a scanner 12, a plurality of sensors 13 and an electronic processing unit 14. The latter is in operative and command contact with the scanner 12 and with the sensors 13.

The scanner 12 and the plurality of sensors 13 are positioned on opposite sides of the tree trunk 2 and are operatively associated, in the sense that the sensors 13 are able to receive the parallel light rays 11 emitted in succession by the scanner 12. Conveniently the light rays 11 are infrared rays. They invest a semi-contour 15a of the overall contour 15. A portion of these rays 11 is reflected by the semi-contour 15a, whereas a portion is not reflected by the semi-contour 15a. Of all these light rays 11, two are tangential to the contour 15 or closely approximate, depending on the density of the light rays 11, this situation.

Obviously the position of the scanner 12 as well as that of the sensor 13 within the known reference system X;Y;Z are known, so in this system it is possible to compute, by means of the electronic processing unit 14, the straight line coinciding with the direction of these two tangential light rays 11. Thereby two of the five geometric conditions which the sought ellipse must meet have been found, since the ellipse must be tangential to the straight lines coinciding with the two determined light rays 11.

Figure 2 shows a first embodiment of the device at the moment of determination of at least a set of three points belonging to the contour 15 of the cross section 3. For this purpose the device comprises a first source of laser light 8a, a second source of laser light 8b, a first matrix telecamera 9a and a second matrix telecamera 9b. The electronic processing unit 14 is in operative and command contact also with these elements as well as with a device 16 for measuring the distance travelled by the tree trunk 2. From the operative point of view the elements of equal apex a or be are respectively associated.

Hence, with reference to the first semi-contour 15a, it is invested by a first laser light beam 5a, which being incident on the semi-contour 15a forms on the first section of contour 6a a laser light line 7a. In order to have a good distribution of the geometric conditions, it is convenient for that section of contour 6a to be positioned roughly in a central position on the first semi-contour 15a, so that a part of the contour 15 is taken into consideration that is distant from the part of contour 15 taken into consideration when determining the two light rays 11 tangential to the contour 15.

The first laser light beam 5a is emitted by a first source of laser light 8a, positioned on the side of the semi-contour 15a.

From the same side of the laser light source 8a, is also positioned a first matrix telecamera 9a, but in such a manner that its optical axis forms an angle β of between 30° and 60° with the plane containing the laser light beam 5a (see Figure 5). Optimal results are reached with an angle β of 45°. This telecamera 9a obliquely captures an image of the laser light line 7a.

An example of such an image is shown in Figure 4.

The telecamera 9a presents a high number of photosensitive elements, for instance 210,000, so it is able to detect a plurality of points of the light line 7a and to emit electrical signals according to such detection. Each of the detected points of the contour is associated to a corresponding photosensitive element, which emits an electrical signal for having been invested by the laser light. In this way the set of electrical signals electrically represents an image of the plurality of points forming the first laser light line 7a captured by the first matrix telecamera 9a.

Obviously in the known reference system X;Y;Z, all geometric parameters of interest are known, such as the position of the laser light source 8a, of the telecamera 9a and of the photosensitive elements positioned in the telecamera 9a and the value of the angle β, so that the electronic processing unit 14 is able to determine, using known cognitions and known geometric computation processes and with respect to the known reference system X;Y;Z, the position of the plurality of points belonging to the laser light line 7a.

In a manner similar to the first semi-contour 15a, a second semi-contour 15b of the contour 15 of the cross section 3 is invested by a second laser light beam 5b, which being incident on a second length of contour 6b, placed in roughly central position on the second semi-contour 15b, forms a second laser light line 7b. The second laser light beam 5b is emitted by a second source of laser light 8b positioned on the side of the semi-contour 15b.

Similarly to what has already been described with reference to the semi-contour 15a, a second matrix telecamera 9b identical to the first is provided. The optical axis of this telecamera 9b also forms an angle β with the plane containing the laser light beams 5a,5b.

In this case the set of electrical signals emitted by the telecamera 9b electrically represents an image of the plurality of points forming the second light line 7b.

In this case as well, the electronic processing unit 14 is able to determine, similarly to what has been described previously and with respect to the known reference system X;Y;Z, the position of the plurality of points belonging to the laser light line 7b.

To sharpen the vision of the telecameras 9a,9b, they can present a filter withholding all light outside the laser light.

Any set of three points amongst those forming the laser light lines 7a,7b allows to identify three additional conditions which the sought ellipse is to meet. The latter shall have to pass through said set of three points.

It is now possible to determine mathematically the sought ellipse with the electronic processing unit 14.

Obviously each possible set of three points identifies, together with the two aforementioned geometric conditions related to the two tangential light rays 11, a different ellipse. Hence among all the ellipses determined, the electronic processing unit 14 chooses the one that presents the minimum square error and this ellipse is the one with which the measured cross section 3 is approximated.

This is repeated for each cross section 3 of the trunk 2 and by means of the device 16 for measuring the distance travelled, the advance displacement of the trunk 2 is measured. In this way it is possible to correlate spatially the different cross sections 3 measured, obtaining a succession of ellipses which provides a schematic mathematical representation of the actual conformation of the trunk 2 both in regard to the dimensions of the generic cross section 3 and in regard to the curvature of the trunk 2.

Measuring device 16 can be embodied by a known pulse generator, which allows for reliable and accurate measurement.

Figure 3 represents a second embodiment of the device able to determine a set of three points belonging to the contour 15 of the cross section 3. In this case the device can further comprise, with respect to the first embodiment, an additional first source of laser light 80a and an additional second source of laser light 80b.

The additional first source of laser light 80a emits an additional first laser light beam 50a which is incident on the first semi-contour 15a forming on an additional first length of contour 60a of the first semi-contour 15a an additional first laser light line 70a, whilst the additional second source of laser light 80b emits an additional second laser light beam 50b which is incident on the second semi-contour 15b forming on an additional second length of contour 60b of the second semi-contour 15b an additional second laser light line 70b. The first telecamera 9a captures also an image of the additional first laser light line 70a and the second matrix telecamera 9b captures also an image of the additional second laser light line 70b. In this way it is possible to broaden the portion of contour 15, constituted by the contour lengths 6a,6b,60a,60b, undergoing measurement, and to distribute the set of three points more uniformly along the contour 15.

For this purpose the operation of the additional sources of laser light is similar to that described for the first embodiment and the electronic processing unit 14 is in operative and command contact also with the additional sources of laser light 80a,80b and the set of three points can also present points belonging to the lengths of contour 60a,60b.

According to a third embodiment of the invention, the device further comprises, with respect to the first embodiment, an additional first matrix telecamera 90a and an additional matrix telecamera 90b.

Also these telecameras 90a,90b can present a filter to withhold light other than laser light. Since the additional cameras 90a,90b are positioned on the opposite side of the section plane in Figure 2 with respect to the telecameras 9a,9b, and are therefore not visible therein, reference can be made to Figure 2 for this third embodiment as well.

The optical axis of the additional first telecamera 90a forms an angle β with the plane containing the laser light beams 5a,5b, in such a way that the telecamera 90a obliquely captures an image of the first laser light line 7a. The optical axis of the additional second telecamera 90b also forms an angle β with the plane containing the laser light beams 5a,5b, in such a way that the matrix telecamera obliquely captures an image of the second laser light line 7b (see Figure 6).

The angle β in this case has opposite sign to the corresponding angle β of the first and of the second telecamera 9a and 9b, so that the laser light lines 7a,7b can be captured from two symmetric viewpoints. This allows always to capture the laser light line, even when it lies in a groove, recess, cut or nick of the surface of the trunk that obscures it from the field of view of a single telecamera.

According to a fourth embodiment of the invention, the device can further comprise, with respect to the first embodiment, both the additional first source of laser light 80a, along with the additional second source of laser light 80b, and the additional first matrix camera 90a along with the second matrix telecamera 90b.

In this way it is possible to combine in a single device the illustrated advantages connected with the second embodiment and with the third embodiment of the invention.

Since the additional telecameras 90a,90b are positioned on the opposite side of the section plane of Figure 3 with respect to the telecameras 9a,9b, and are therefore not visible therein, reference can be made to figure 3 for this fourth embodiment as well.

Lastly, as Figure 5 shows for the first and the second embodiment, or as Figure 6 shows for the third and the fourth embodiment, two distinct measurement areas 4 and 40 can be envisioned.

In the first measurement area 4, the scanner 12 and the sensors 13 act to determine the pair of light rays 11 tangential to the contour 15. In the second measurement area 40, the sources of laser light 8a,8b, and possibly the sources of laser light 80a,80b operate, as well as the matrix cameras 9a,9b and possibly the matrix cameras 90a,90b, to determine the position of the points belonging to the contour 15.

With reference in particular to Figure 7, wherein, by way of example, the fourth embodiment of the invention has been shown in this hypothesis of whereby the two measurement areas 4 and 40 are kept separate, there is thus a plane A containing the light rays 11 and a plane B containing the laser light beams 5a,5b and possibly 50a,50b thereby avoiding mutual interference problems between the light rays 11 and the laser light beams 5a,5b,50a,50b.

By means of the device 16 for measuring the travel, there are no problems in rendering mathematically coplanar, associating them to the same cross section, the results obtained in the two distinct measurement areas 4 and 40.

The present invention thus attains the set objects.

Obviously, in its practical realisation it may also assume different forms and configurations from the one illustrated above without thereby departing from the scope of protection.

Moreover, all components may be replaced with technically equivalent elements and any forms, sizes and materials may be employed according to the requirements.

## Claims

1. Device (1) for measuring the dimensions of a longitudinally very extensive object (2) advancing along its longitudinal axis through the device, whose generic cross section (3) has curved contour, comprising:
a first and a second source of laser light (8a,8b), which are arranged to emit a first respectively second laser light beam (5a,5b) that is incident on the contour (15) of the cross section (3) forming a first respectively second laser light line (7a,7b) on it;
a first and a second matrix telecamera (9a,9b), which are arranged, by positioning them with the respective optical axis forming an angle (β) with the plane containing the light beams (5a,5b), to have the image of the first respectively second laser light line (7a,7b) being obliquely captured by said first respectively second telecamera (9a,9b); whereby the first and the second source of laser light (8a,8b) are positioned on different sides of the contour (15), in order to have the first light beam (5a) of the first source of laser (8a) being incident on a first semi-contour (15a) of the contour (15) and forming on a first length of contour (6a) said first laser light line (7a) and the second light beam (5b) of the second source of laser light (8b) being incident on a second semi-contour (15b) of the contour (15) and forming on a second length of contour (6b) said second laser light line (7b),
**characterised in that** it further comprises:
a scanner (12), which is arranged to emit a succession of mutually parallel light rays (11) that are incident on the first semi-contour (15a);
a plurality of sensors (13) positioned on the opposite side of the object (2) with respect to the scanner (12) and operatively associated to the scanner (12) to receive the light rays (11);
a device (16) for measuring the distance travelled by the object during its advance, in such a way that it is possible to correlate spatially the different generic cross sections (3) measured and
an electronic processing unit (14), which is arranged to be in operative and command contact with the scanner (12), the sensors (13), the laser light sources (8a,8b), the telecameras (9a,9b) and the measuring device (16), to determine the two straight lines coinciding with the direction of the the two light rays (11) which are tangential to the first semi-contour (15a) and to determine at least one set of three points belonging to the lengths of contour (6a,6b) and to choose among all the ellipses, which pass through the set of three points belonging to the contour (15) and which are tangential to the two light rays (11) tangential to the first semi-contour (15a), the one that best approximates mathematically the contour (15) of the cross section (3) to be measured,
so that the succession of the ellipses approximating the various cross sections provides a schematic spatial mathematical representation of the actual spatial conformation of the object (2).

2. Device according to claim 1 **characterised in that** it further comprises:
an additional first source of laser light (80a), which is arranged to emit an additional first laser light beam (50a) that is incident on the first semi-contour (15a) forming on an additional first length of contour (60a) of the first semi-contour (15a) an additional first laser light line (70a);
an additional second source of laser light (80b), which is arranged to emit an additional laser light beam (50b) that is incident on the second semi-contour (15b) forming on an additional second length of contour (60b) of the second semi-contour (15b) an additional second laser light line (70b); the first telecamera (9a) capturing also an image of the additional first laser light line (70a) and the second telecamera capturing also an image of the additional second laser light line (70b) and the electronic processing unit (14) being in operative and command contact also with the sources of laser light (80a,80b) and the set of three points presenting also points belonging to the contour lengths (60a,60b).

3. Device according to claim 1 **characterised in that** it further comprises:
an additional first and an additional second matrix telecamera (90a,90b), which are arranged, by positioning them with the respective optical axis forming an angle (β) with the plane containing the laser light beams (5a,5b), to have an image of the first respectively second laser light line (7a,7b) being obliquely captured by said first respectively second telecamera (90a,90b), the electronic processing unit (14) being in operative and command contact also with the telecameras (90a,90b).

4. Device according to claim 2, **characterised in that** it further comprises:
an additional first and an additional second matrix telecamera (90a,90b), which are arranged, by positioning them with the respective optical axis forming an angle (β) with the plane containing the laser light beams (5a,5b,50a,50b), to have an image of the first and of the additional first laser light lines (7a,70a) respectively of the second and of the additional second laser light lines (7b,70b) being obliquely captured by said additional first respectively additional second telecamera (90a,90b), the electronic processing.unit (14) being in operative and command contact also with the telecameras (90a,90b).

5. Device according to one of the claims from 1 to 4, **characterised in that** the telecameras (9a,90a, 9b,90b) present a filter withholding all light other than laser light.

6. Device according to one of the claims from 1 to 4, **characterised in that** the light rays (11) are emitted in a plane (A) set in a first measurement area (4) and that the laser light beams (5a,5b, 50a,50b) are emitted in a plane (B) set in a second measurement area (40), the planes (A) and (B) being parallel to the plane of the cross section (3) to be measured.

7. Device according to one of the claims from 1 to 4, **characterised in that** the angle β ranges from 30° to 60°, and it is preferably 45°.

8. Device according to claim 1 **characterised in that** the measuring device (16) is a pulse generator to be applied to the device (16) for transporting the objects (2).

9. Device according to claim 1 **characterised in that** the light rays (11) are infrared.

## Patentansprüche

1. Vorrichtung (1) zum Messen der Dimensionen eines langgestreckten Objektes (2), das längs der eigenen Längsachse durch die Vorrichtung vorgeschoben wird und einen allgemeinen Querschnitt (3) mit gekrümmter Kontur aufweist, umfassend:
eine erste und eine zweite Laserlichtquelle (8a, 8b), die derart angeordnet sind, dass ein erster bzw. ein zweiter Laserlichtstrahl (5a, 5b) ausgestrahlt wird, der auf der Kontur (15) des Querschnittes (3) einfällt und an derselben eine erste bzw. eine zweite Laserlichtlinie (7a, 7b) bildet;
eine erste und eine zweite Matrixaufnahmekamera (9a, 9b), die derart angeordnet sind, und zwar so daß die jeweilige optische Achse ein Winkel (β) mit der die Laserlichtstrahlen (5a, 5b) enthaltenden Ebene bildet, dass die erste bzw. die zweite Aufnahmekamera (9a, 9b) eine Abbildung der ersten bzw. der zweiten Laserlichtlinie (7a, 7b) schräg aufnimmt;
wobei die erste und die zweite Laserlichtquelle (8a, 8b) an abgewandten Seiten der Kontur (15) derart angeordnet sind, dass der erste Laserlichtstrahl (5a) der ersten Laserlichtquelle (8a) auf einer erste Konturhälfte (15a) der Kontur (15) einfällt und an einem ersten Konturabschnitt (6a) die erste Laserlichtlinie (7a) bildet, und derart, dass der zweite Laserlichtstrahl (5b) der zweiten Laserlichtquelle (8b) an einer zweiten Konturhälfte (15b) der Kontur (15) einfällt und an einem zweiten Konturabschnitt (6b) die zweite Laserlichtlinie (7b) bildet,
**dadurch gekennzeichnet, dass** sie überdies umfasst:
einen Scanner (12), der derart angeordnet ist, dass eine Reihe von zueinander parallelen Lichtstrahlen (11) ausgesendet werden, die auf der ersten Konturhälfte (15a) einfallen;
eine Vielzahl von Sensoren (13), die an einer gegenüber dem Scanner (12) abgewandten Seite des Objektes (2) angeordnet und wirksam dem Scanner (12) zugeordnet sind, um die Lichtstrahlen (11) aufzunehmen;
eine Messeinrichtung (16) zur Messung des durch das Objekt zurückgelegten Weges während seines Vorschubes, derart, dass es möglich ist, die verschiedenen allgemeinen, gemessenen Querschnitte (3) räumlich in Korrelation zu bringen und
eine elektronische Verarbeitungseinheit (14), die derart angeordnet ist, dass sie mit dem Scanner (12), den Sensoren (13), den Laserlichtquellen (8a, 8b), den Aufnahmekameras (9a, 9b) und der Messeinrichtung (16) in Arbeits- und Steuerungskontakt sind, um die beiden geraden Linien zu erfassen, die mit den Richtungen der beiden die erste Konturhälfte (15a) berührenden Lichtstrahlen (11) zusammenfallen und um mindestens drei Punkte festzulegen, die den Konturabschnitten (6a, 6b) angehören und um, unter allen Ellipsen, die durch, der Kontur (15) angehörenden drei Punkte gehen und die beiden die erste Konturhälfte (15a) berührenden Lichtstrahlen (11) berühren, jene auszuwählen, die mathematisch der Kontur (15) des den Messgegenstand bildenden Querschnittes (3) am nächsten liegt, sodass die Folge der sich den verschiedenen Querschnitten annähernden Ellipsen eine schematische, mathematische Raumdarstellung der reellen Ausbildung des Objektes (2) liefert.

2. Vorrichtung nach Anspruch 1, **dadurch gekennzeichnet, dass** sie überdies umfasst:
eine weitere erste Laserlichtquelle (80a), die derart angeordnet ist, dass ein weiterer, erster Laserlichtstrahl (50a) ausgestrahlt wird, der auf der ersten Konturhälfte (15a) einfällt und an einem weiteren ersten Konturabschnitt (60a) der ersten Konturhälfte (15a) eine weitere erste Laserlichtlinie (70a) bildet;
eine weitere zweite Laserlichtquelle (80b), die derart angeordnet ist, dass ein weiterer zweiter Laserlichtstrahl (50b) ausgestrahlt wird, der an der zweiten Konturhälfte (15b) einfällt und an einem weiteren zweiten Konturabschnitt (60b) der zweiten Konturhälfte (15b) eine weitere zweite Laselichtlinie (70b) bildet, wobei die erste Aufnahmekamera (9a) auch eine Abbildung der weiteren ersten Laserlichtlinie (70a) aufnimmt und die zweite Aufnahmekamera (9b) auch eine Abbildung der weiteren zweiten Laserlichtlinie (70b) aufnimmt und die elektronische Verarbeitungseinheit (14) sich auch mit den Laserlichtquellen (80a, 80b) in Arbeits- und Steuerungskontakt befindet und zu den drei Punkte auch Punkte gehören, die den Konturabschnitte (60a, 60b) angehören.

3. Vorrichtung nach Anspruch 1, **dadurch gekennzeichnet, dass** sie überdies umfasst:
eine weitere erste und eine weitere zweite Matrixaufnahmekamera (90a, 90b), die derart angeordnet sind, und zwar so daß die jeweilige optische Achse ein Winkel (β) mit der die Laserlichtstrahlen (5a, 5b) enthaltenden Ebene bildet, dass die weitere erste bzw. weitere zweite Aufnahmekamera (90a, 90b) eine Abbildung der ersten bzw. der zweiten Laserlichtlinie (7a, 7b) schräg aufnimmt, wobei die elektronische Verarbeitungseinheit (14) auch mit den Aufnahmekameras (90a, 90b) in Arbeitsund Steuerungskontakt ist.

4. Vorrichtung nach Anspruch 2, **dadurch gekennzeichnet, dass** sie überdies umfasst:
eine weitere erste und eine weitere zweite Matrixaufnahmekamera (90a, 90b), die derart angeordnet sind, und zwar so daß die jeweilige optische Achse ein Winkel (β) mit der die Laserlichtstrahlen (5a, 5b, 50a, 50b) enthaltenden Ebene bildet, dass die weitere erste bzw. weitere zweite Aufnahmekamera (90a, 90b) eine Abbildung der ersten und der weiteren ersten Laserlichtlinie (7a, 70a) bzw. der zweiten und der weiteren zweiten Laserlichtlinie (7b, 70b) schräg aufnimmt,
wobei die elektronische Verarbeitungseinheit (14) auch mit den Aufnahmekameras (90a, 90b) in Arbeits- und Steuerkontakt liegt.

5. Vorrichtung nach einem der Ansprüche von 1 bis 4, **dadurch gekennzeichnet, dass** die Aufnahmekameras (9a, 90a, 9b, 90b) ein Filter aufweisen, das das gesamte Licht außerhalb des Laserlichtes zurückhält.

6. Vorrichtung nach einem der Ansprüche von 1 bis 4, **dadurch gekennzeichnet, dass** die Lichtstrahlen (11) in einer Ebene (A) ausgesendet werden, die in einem ersten Messbereich (4) liegt, und dass die Laserlichtstrahlen (5a, 5b, 50a, 50b) in einer Ebene (B) ausgestrahlt werden, die in einem zweiten Messbereich (40) liegt, wobei die Ebenen (A) und (B) zur Ebene des den Gegenstand der Messung bildenden Querschnittes (3) parallel sind.

7. Vorrichtung nach einem der Ansprüche von 1 bis 4, **dadurch gekennzeichnet, dass** der Winkel (β) zwischen 30° und 60° liegt, bevorzugter Weise 45° ist.

8. Vorrichtung nach Anspruch 1, **dadurch gekennzeichnet, dass** die Messeinrichtung (16) ein an einer Fördervorrichtung (16) der Objekte (2) anzubringender Taktgeber ist.

9. Vorrichtung nach Anspruch 1, **dadurch gekennzeichnet, dass** die Lichtstrahlen (11) infrarot sind.

## Revendications

1. Un dispositif (1) de mesure des dimensions d'un objet (2) très étendu longitudinalement, avançant le long de son propre axe longitudinal au travers du dispositif et présentant une générique section transversale (3) à contour courbe, comprenant:
une première et une seconde source de lumière laser (8a, 8b), lesquelles sont disposées de manière à émettre respectivement un premier et un second faisceau lumineux laser (5a, 5b), qui frappe le contour (15) de la section transversale (3) en formant sur ce dernier respectivement une première et une seconde ligne lumineuse laser (7a, 7b); une première et une seconde caméra à matrice (9a, 9b) lesquelles, si on les dispose de manière à ce que leurs respectifs axes optiques forment un angle (β) avec le plan contenant les faisceaux lumineux (5a, 5b), sont disposées de manière à reccueillir obliquement respectivement une image de la première et de la seconde ligne lumineuse laser (7a, 7b) ;
la première et la seconde source de lumière laser (8a, 8b) étant disposées en des côtés opposés du contour (15), de manière à ce que le premier faisceau lumineux (5a) de la première source de lumière laser (8a) frappe un premier demi-contour (15a) du contour (15) et forme sur une première portion de contour (6a) ladite première ligne lumineuse laser (7a), et à ce que le second faisceau lumineux (5b) de la seconde source de lumière laser (8b) frappe un second demi-contour (15b) du contour (15) et forme sur une seconde portion de contour (6b) ladite seconde ligne lumineuse laser (7b), **caractérisé en ce qu'**il comprend en outre:
un scanner (12), lequel est disposé de manière à émettre une succession de rayons lumineux (11) réciproquement parallèles et frappant le premier demi-contour (15a);
une pluralité de capteurs (13) disposés de l'autre côté de l'objet (2) par rapport au scanner (12) et associés opérativement à ce dernier pour recevoir ses rayons lumineux (11);
un dispositif de mesure (16) du parcours effectué par l'objet pendant son déplacement vers l'avant, de manière à ce qu'il soit possible de corréler dans l'espace les diverses sections transversales génériques (3) mesurées, et
une unité d'élaboration électronique (14), laquelle est disposée de manière à être en contact opératif et de commande avec le scanner (12), les capteurs (13), les sources de lumière laser (8a, 8b), les caméras (9a, 9b) et le dispositif de mesure (16), pour déterminer les deux lignes droites coïncidentes avec les directions des deux rayons lumineux (11) tangents au premier demi-contour (15a) et pour déterminer au moins une triade de points appartenant aux portions de contour (6a, 6b) et pour choisir parmi toutes les ellipses, qui passent par la triade de points appartenant au contour (15) et qui sont tangentes aux deux rayons lumineux (11) tangents au premier demi-contour (15a), celle qui donne la meilleure approximation mathématique du contour (15) de la section transversale (3) faisant objet de la mesure, de manière à ce que la succession des ellipses donnant une approximation des diverses sections transversales fournisse une représentation schématique mathématique dans l'espace de la réelle conformation de l'objet (2).

2. Dispositif selon la revendication 1, **caractérisé en ce que** ce dernier comprend en outre:
une ultérieure première source de lumière laser (80a), laquelle est disposée de manière à émettre un ultérieur premier faisceau lumineux laser (50a), qui frappe le premier demi-contour (15a) en formant sur une ultérieure première portion de contour (60a) du premier demi-contour (15a) une ultérieure première ligne lumineuse laser (70a);
une ultérieure seconde source lumineuse laser (80b), laquelle est disposée de manière à émettre un ultérieur second faisceau lumineux laser (50b), qui frappe le second demi-contour (15b) en formant sur une ultérieure seconde portion de contour (60b) du second demi-contour (15b) une ultérieure seconde ligne lumineuse laser (70b), la première caméra (9a) reccueillant également une image de l'ultérieure première ligne lumineuse laser (70a) et la seconde caméra (9b) reccueillant également une image de l'ultérieure seconde ligne lumineuse laser (70b), et l'unité d'élaboration électronique (14) étant en contact opératif et de commande également avec les sources de lumière laser (80a, 80b) et la triade de points présentant également des points appartenant aux portions de contour (60a, 60b).

3. Dispositif selon la revendication 1, **caractérisé en ce que** ce dernier comprend en outre:
une ultérieure première et une ultérieure seconde caméra à matrice (90a, 90b) lesquelles, si on les dispose de manière à ce que leurs respectifs axes optiques forment un angle (β) avec le plan contenant les faisceaux lumineux (5a, 5b), sont disposées de manière à reccueillir obliquement respectivement une image de la première et de la seconde ligne lumineuse laser (7a, 7b), l'unité d'élaboration électronique (14) étant en contact opératif et de commande également avec les caméras (90a, 90b).

4. Dispositif selon la revendication 2, **caractérisé en ce que** ce dernier comprend en outre:
une ultérieure première et une ultérieure seconde caméra à matrice (90a, 90b) lesquelles, si on les dispose de manière à ce que leurs respectifs axes optiques forment un angle (β) avec le plan contenant les faisceaux lumineux (5a, 5b, 50a, 50b), sont disposées de manière à reccueillir obliquement respectivement une image de la première et ultérieure première ligne lumineuse (7a, 70a) et de la seconde et
ultérieure seconde ligne lumineuse laser (7b, 70b), l'unité d'élaboration électronique (14) étant en contact opératif et
de commande également avec les caméras (90a, 90b).

5. Dispositif selon l'une des revendications 1 à 4, **caractérisé en ce que** les caméras (9a, 90a, 9b, 90b) présentent un filtre retenant toute la lumière sauf la lumière laser.

6. Dispositif selon l'une des revendications 1 à 4, **caractérisé en ce que** les rayons lumineux (11) sont émis dans un plan (A) disposé dans une première zone de mesure (4), et que les faisceaux lumineux laser (5a, 5b, 50a, 50b) sont émis dans un plan (B) disposé dans une seconde zone de mesure (40), les plans (A) et (B) étant parallèles au plan de la section transversale (3) objet de la mesure.

7. Dispositif selon l'une des revendications 1 à 4, **caractérisé en ce que** l'angle (β) est compris entre 30° et 60°, et est préférablement de 45°.

8. Dispositif selon la revendication 1, **caractérisé en ce que** le dispositif de mesure (16) est un générateur d'impulsions à appliquer au dispositif de transport (16) des objets (2).

9. Dispositif selon la revendication 1, **caractérisé en ce que** les rayons lumineux (11) sont infrarouges.
